# EUROPEAN PATENT APPLICATION

(11) **EP 4 765 697 A1**
(43) Date of publication of application: **24.06.2026**
(21) Application number: 25218293.6
(22) Date of filing: 25.11.2025
(51) Int. Cl.: H04L 1/00, H04L 5/00, H04W 72/00

(54) **APPARATUS AND METHODS RELATING TO CHANNEL STATE INFORMATION REPORTING**

(30) Priority: 19.12.2024 US 202463736229 P
(71) Applicant: Nokia Technologies Oy, 02610 Espoo (FI)
(72) Inventor: DEGHEL, Matha, Montrouge (FR)
(74) Representative: Nokia EPO representatives

(57) **Abstract**

There is provided an apparatus comprising: at least one processor; and at least one memory storing instructions that, when executed by the at least one processor, cause the apparatus at least to: determine information associated with at least one of one or more channel state information, CSI, reports which are to be reported to an access node; and send said determined information associated with the at least one of the one or more CSI reports to the access node in one or more medium access control control elements, MAC CE, at least one of the one or more MAC CE providing a buffer status in addition to the determined information associated with the at least one of one or more CSI reports.

## Description

### TECHNICAL FIELD

Various example embodiments relate generally to apparatus and methods, and in particular but not exclusively to apparatus and methods relating to channel state information, CSI, reporting.

### BACKGROUND

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

### BRIEF DESCRIPTION

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to one aspect, there is provided an apparatus comprising: means for performing one or more measurements for one or more channel state information, CSI, reports; means for determining a size associated with at least one of the one or more CSI reports to be sent to an access node; and means for sending a report to the access node, said report comprising information about the determined size associated with the at least one of the one or more CSI reports.

The report comprising information about the determined size associated with the at least one of the one or more of the CSI reports may comprise a buffer status report, the buffer status report comprising information about the determined size associated with the at least one of the one or more CSI reports.

The apparatus may comprise means for determining the report comprising information about the determined size associated with the at least one of the one or more of the CSI reports.

The means for determining the report comprising information about the determined size associated with the at least one of the one or more of the CSI reports may be for determining the report in response to determining that at least one of the one or more CSI reports, for sending to the access node, is available.

The report comprising information about the determined size associated with the at least one of the one or more of the CSI reports may comprise information about at least one logical channel or at least one logical channel group, the at least one logical channel or at least one logical channel group being associated with at least one of the one or more CSI reports.

The means for sending the report comprising the information about the determined size associated with at least one of the one or more of the CSI reports to the access node may be for sending the report via an uplink channel.

The apparatus may comprise means for determining if there is at least one available resource for transmitting at least a part of the one or more CSI reports and when it is determined that there is at least one available resource for transmitting at least the part of the one or more CSI reports, transmitting to the access node at least the part of the one or more CSI reports.

The means for sending the report comprising information about the determined size associated with at least one of the one or more of the CSI reports may be for sending the report when at least one resource is unavailable for sending at least a part of the one or more CSI reports to the access node.

The means for sending the report comprising information about the determined size associated with at least one of the one or more of the CSI reports to the access node may be for sending the report via one or more medium access control control element, MAC CE.

The one or more MAC CE may comprise information which identifies the at least one logical channel or the at least one logical channel group.

The apparatus may comprise means for providing information indicating that the one or more MAC CE provides information about the determined size associated with at least one of the one or more of the CSI reports.

The information indicating that the one or more MAC CE provides information about the determined size associated with at least one of the one or more of the CSI reports may be provided in one or more of a medium access control sub header, a medium access control header, or in the one or more MAC CE.

The one or more MAC CE may comprise one or more of: a buffer status report MAC CE; a MAC CE dedicated to CSI; a power headroom reporting MAC CE; a configured grant confirmation MAC CE; a beam failure recovery CE; a MAC CE for a recommended bit rate query; a multiple entry configured grant confirmation; or a MAC CE for a number of desired guard symbols.

The one or more MAC CE may further comprise data associated with the at least one logical channel or the at least one logical channel group.

At least one of the one or more CSI reports may be associated with: one or more serving cells; one or more carriers; one or more component carriers; or one or more bandwidth parts.

The said report comprising information about the determined size associated with at least one of the one or more of the CSI reports may comprise information indicating the one or more serving cells, one or more component carriers, one or more carriers, or one or more bandwidth parts associated with the at least one of the one or more CSI reports.

The apparatus may comprise means for determining that one or more triggers have occurred and in response to determining that one or more triggers have occurred, sending the report comprising information about the determined size associated with at least one of the one or more of the CSI reports.

The one or more triggers may comprise one or more of: one or more events; or one or more conditions.

The report comprising information about the determined size associated with at least one of the one or more of the CSI reports may further comprise information about the one or more triggers that have occurred.

The apparatus may comprise means for determining that there are insufficient resources for sending the report comprising information about the determined size associated with at least one of the one or more of the CSI reports to the access node, and in response to determining that there are insufficient resources for sending the report comprising information about the determined size associated with at least one of the one or more of the CSI reports to the access node, at least one part of the report comprising information about the determined size associated with at least one of the one or more of the CSI reports is prioritized for sending to the access node.

The apparatus may comprise means for determining that there are insufficient resources for sending the report comprising information about the determined size associated with at least one of the one or more of the CSI reports to the access node, and in response to determining that there are insufficient resources for sending the report comprising information about the determined size associated with at least one of the one or more of the CSI reports to the access node, at least one part of the report comprising information about the determined size associated with at least one of the one or more of the CSI reports is dropped .

The apparatus may comprise means for receiving configuration information from the access node, said configuration information configuring the apparatus to provide the report comprising information about the size associated with at least one of one or more CSI reports which are to be reported, said means for sending the report to the access node sending the report which is in accordance with the configuration information.

The apparatus may be provided in or be a user equipment or terminal.

According to a second aspect, there is provided a method comprising: performing one or more measurements for one or more channel state information, CSI, reports; determining a size associated with at least one of the one or more CSI reports to be sent to an access node; and sending a report to the access node, said report comprising information about the determined size associated with the at least one of the one or more CSI reports.

The report comprising information about the determined size associated with the at least one of the one or more of the CSI reports may comprise a buffer status report, the buffer status report comprising information about the determined size associated with the at least one of the one or more CSI reports.

The method may comprise determining the report comprising information about the determined size associated with the at least one of the one or more of the CSI reports.

The method may comprise determining the report in response to determining that at least one of the one or more CSI reports, for sending to the access node, is available.

The report comprising information about the determined size associated with the at least one of the one or more of the CSI reports may comprise information about at least one logical channel or at least one logical channel group, the at least one logical channel or at least one logical channel group being associated with at least one of the one or more CSI reports.

The method may comprise sending the report comprising the information about the determined size associated with at least one of the one or more of the CSI reports to the access node via an uplink channel.

The method may comprise determining if there is at least one available resource for transmitting at least a part of the one or more CSI reports and when it is determined that there is at least one available resource for transmitting at least the part of the one or more CSI reports, to transmit to the access node at least the part of the one or more CSI reports.

The method may comprise sending the report comprising information about the determined size associated with at least one of the one or more of the CSI reports when at least one resource is unavailable for sending at least a part of the one or more CSI reports to the access node.

The method may comprise sending the report comprising information about the determined size associated with at least one of the one or more of the CSI reports to the access node via one or more medium access control control element, MAC CE.

The one or more MAC CE may comprise information which identifies the at least one logical channel or the at least one logical channel group.

The method may comprise providing information indicating that the one or more MAC CE provides information about the determined size associated with at least one of the one or more of the CSI reports.

The information indicating that the one or more MAC CE provides information about the determined size associated with at least one of the one or more of the CSI reports may be provided in one or more of a medium access control sub header, a medium access control header, or in the one or more MAC CE.

The one or more MAC CE may comprise one or more of: a buffer status report MAC CE; a MAC CE dedicated to CSI; a power headroom reporting MAC CE; a configured grant confirmation MAC CE; a beam failure recovery CE; a MAC CE for a recommended bit rate query; a multiple entry configured grant confirmation; or a MAC CE for a number of desired guard symbols.

The one or more MAC CE may further comprise data associated with the at least one logical channel or the at least one logical channel group.

At least one of the one or more CSI reports may be associated with: one or more serving cells: one or more more carriers; one or more component carriers; or one or more bandwidth parts.

The report comprising information about the determined size associated with at least one of the one or more of the CSI reports may comprise information indicating the one or more serving cells, one or more component carriers, one or more carriers, or one or more bandwidth parts associated with the at least one of the one or more CSI reports.

The method may comprise determining that one or more triggers have occurred and in response to determining that one or more triggers have occurred, sending the report comprising information about the determined size associated with at least one of the one or more of the CSI reports.

The one or more triggers may comprise one or more of: one or more events; or one or more conditions.

The report comprising information about the determined size associated with at least one of the one or more of the CSI reports may further comprise information about the one or more triggers that have occurred.

The method may comprise determining that there are insufficient resources for sending the report comprising information about the determined size associated with at least one of the one or more of the CSI reports to the access node, and in response to determining that there are insufficient resources for sending the report comprising information about the determined size associated with at least one of the one or more of the CSI reports to the access node, prioritizing at least one part of the report comprising information about the determined size associated with at least one of the one or more of the CSI reports for sending to the access node.

The method may comprise determining that there are insufficient resources for sending the report comprising information about the determined size associated with at least one of the one or more of the CSI reports to the access node, and in response to determining that there are insufficient resources for sending the report comprising information about the determined size associated with at least one of the one or more of the CSI reports to the access node, dropping at least one part of the report comprising information about the determined size associated with at least one of the one or more of the CSI reports.

The method may comprise receiving configuration information from the access node, said configuration information configuring the apparatus to provide the report comprising information about the size associated with at least one of one or more CSI reports which are to be reported, and sending the report to the access node in accordance with the configuration information.

The method may be performed by an apparatus. The apparatus may be or be provided in a user equipment or terminal.

According to a third aspect, there is provided an apparatus comprising: at least one processor; and at least one memory storing instructions that, when executed by the at least one processor, cause the apparatus at least to: perform one or more measurements for one or more channel state information, CSI, reports; determine a size associated with at least one of the one or more CSI reports to be sent to an access node; and send a report to the access node, said report comprising information about the determined size associated with the at least one of the one or more CSI reports.

The report comprising information about the determined size associated with the at least one of the one or more of the CSI reports may comprise a buffer status report, the buffer status report comprising information about the determined size associated with the at least one of the one or more CSI reports.

The instructions, when executed by the at least one processor, may further cause the apparatus to determine the report comprising information about the determined size associated with the at least one of the one or more of the CSI reports.

The instructions, when executed by the at least one processor, may further cause the apparatus to determine the report in response to determining that at least one of the one or more CSI reports, for sending to the access node, is available.

The report comprising information about the determined size associated with the at least one of the one or more of the CSI reports may comprise information about at least one logical channel or at least one logical channel group, the at least one logical channel or at least one logical channel group being associated with at least one of the one or more CSI reports.

The instructions, when executed by the at least one processor, may further cause the apparatus to send the report comprising the information about the determined size associated with at least one of the one or more of the CSI reports to the access node via an uplink channel.

The instructions, when executed by the at least one processor, may further cause the apparatus to determine if there is at least one available resource for transmitting at least a part of the one or more CSI reports and when it is determined that there is at least one available resource for transmitting at least the part of the one or more CSI reports, to transmit to the access node at least the part of the one or more CSI reports.

The instructions, when executed by the at least one processor, may further cause the apparatus to send the report comprising information about the determined size associated with at least one of the one or more of the CSI reports when at least one resource is unavailable for sending at least a part of the one or more CSI reports to the access node.

The instructions, when executed by the at least one processor, may further cause the apparatus to send the report comprising information about the determined size associated with at least one of the one or more of the CSI reports to the access node via one or more medium access control control elements, MAC CE.

The one or more MAC CE may comprise information which identifies the at least one logical channel or the at least one logical channel group.

The instructions, when executed by the at least one processor, may further cause the apparatus to provide information indicating that the one or more MAC CE provides information about the determined size associated with at least one of the one or more of the CSI reports.

The information indicating that the one or more MAC CE provides information about the determined size associated with at least one of the one or more of the CSI reports may be provided in one or more of a medium access control sub header, a medium access control header, or in the one or more MAC CE.

The one or more MAC CE may comprise one or more of: a buffer status report MAC CE; a MAC CE dedicated to CSI; a power headroom reporting MAC CE; a configured grant confirmation MAC CE; a beam failure recovery CE; a MAC CE for a recommended bit rate query; a multiple entry configured grant confirmation; or a MAC CE for a number of desired guard symbols.

The one or more MAC CE may further comprise data associated with the at least one logical channel or the at least one logical channel group.

At least one of the one or more CSI reports may be associated with: one or more serving cells; one or more more carriers; one or more component carriers; or one or more bandwidth parts.

The said report comprising information about the determined size associated with at least one of the one or more of the CSI reports may comprise information indicating the one or more serving cells, one or more component carriers, one or more carriers, or one or more bandwidth parts associated with the at least one of the one or more CSI reports.

The instructions, when executed by the at least one processor, may further cause the apparatus to determine that one or more triggers have occurred and in response to determining that one or more triggers have occurred, to send the report comprising information about the determined size associated with at least one of the one or more of the CSI reports.

The one or more triggers may comprise one or more of: one or more events; or one or more conditions.

The report comprising information about the determined size associated with at least one of the one or more of the CSI reports may further comprise information about the one or more triggers that have occurred.

The instructions, when executed by the at least one processor, may further cause the apparatus to determine that there are insufficient resources for sending the report comprising information about the determined size associated with at least one of the one or more of the CSI reports to the access node, and in response to determining that there are insufficient resources for sending the report comprising information about the determined size associated with at least one of the one or more of the CSI reports to the access node, prioritizing at least one part of the report comprising information about the determined size associated with at least one of the one or more of the CSI reports for sending to the access node.

The instructions, when executed by the at least one processor, may further cause the apparatus to determine that there are insufficient resources for sending the report comprising information about the determined size associated with at least one of the one or more of the CSI reports to the access node, and in response to determining that there are insufficient resources for sending the report comprising information about the determined size associated with at least one of the one or more of the CSI reports to the access node, dropping at least one part of the report comprising information about the determined size associated with at least one of the one or more of the CSI reports.

The instructions, when executed by the at least one processor, may further cause the apparatus to: receive configuration information from the access node, said configuration information configuring the apparatus to provide the report comprising information about the size associated with at least one of one or more CSI reports which are to be reported, and to send the report to the access node in accordance with the configuration information.

The apparatus may be in or provided by a user equipment or terminal.

According to a fourth aspect, there is provided an apparatus comprising: at least one processor; and at least one memory storing instructions that, when executed by the at least one processor, cause the apparatus at least to: determine information associated with at least one of one or more channel state information, CSI, reports which are to be reported to an access node; and send said determined information associated with the at least one of the one or more CSI reports to the access node in one or more medium access control control elements, MAC CE, at least one of the one or more MAC CE providing a buffer status in addition to the determined information associated with the at least one of one or more CSI reports.

The information associated with the at least one of one or more CSI reports may comprise one or more of: information indicating that the at least one of the one or more CSI reports is available; or information indicating a size of the at least one of the one or more CSI reports.

The instructions, when executed by the at least one processor, may further cause the apparatus to determine the information in response to determining that at least one of the one or more CSI reports, for sending to the access node, is available.

At least one of the one or more MAC CE may comprise information about at least one logical channel or at least one logical channel group, the at least one logical channel or at least one logical channel group being associated with at least one of the one or more CSI reports.

At least one of the one or more MAC CE may further comprise data associated with the at least one logical channel or the at least one logical channel group.

The instructions, when executed by the at least one processor, may further cause the apparatus to determine if there is at least one available resource for transmitting at least a part of the one or more CSI reports and when it is determined that there is at least one available resource for transmitting at least the part of the one or more CSI reports, to transmit to the access node at least the part of the one or more CSI reports.

The instructions, when executed by the at least one processor, may further cause the apparatus to send at least one of the one or more MAC CE when at least one resource is unavailable for sending at least a part of the one or more CSI reports to the access node.

The instructions, when executed by the at least one processor, may further cause the apparatus to provide information indicating that at least one of the one or more MAC CE provides information about at least one of the one or more of the CSI reports.

The information indicating that at least one of the one or more MAC CE provides information about the at least one of the one or more of the CSI reports may be provided in one or more of a medium access control sub header, a medium access control header, or in at least one of the one or more MAC CE.

At least one of the one or more CSI reports may be associated with: one or more serving cells: one or more carriers; one or more component carriers; or one or more bandwidth parts.

The determined information associated with at least one of the one or more of the CSI reports may comprise information indicating the one or more serving cells, one or more component carriers, one or more carriers, or one or more bandwidth parts associated with the at least one of the one or more CSI reports.

The instructions, when executed by the at least one processor, may further cause the apparatus to determine that one or more triggers have occurred and in response to determining that one or more triggers have occurred, to send at least one of the one or more MAC CE.

The one or more triggers may comprise one or more of: one or more events; or one or more conditions.

At least one of the one or more MAC CE may further comprise information about the one or more triggers that have occurred.

The instructions, when executed by the at least one processor, may further cause the apparatus to receive configuration information from the access node, said configuration information configuring the apparatus to provide the one or more MAC CE, and to send at least one of the one or more MAC CE to the access node in accordance with the configuration information.

The apparatus may be in or provided by a user equipment or terminal.

According to a fifth aspect, there is provided an apparatus comprising: means for determining information associated with at least one of one or more channel state information, CSI, reports which are to be reported to an access node; and means for sending said determined information associated with the at least one of the one or more CSI reports to the access node in one or more medium access control control elements, MAC CE, at least one of the one or more MAC CE providing a buffer status in addition to the determined information associated with the at least one of one or more CSI reports.

The information associated with the at least one of one or more CSI reports may comprise one or more of: information indicating that the at least one of the one or more CSI reports is available; or information indicating a size of the at least one of the one or more CSI reports.

The means for determining the information may be for determining the information in response to determining that at least one of the one or more CSI reports, for reporting to the access node, is available.

At least one of the one or more MAC CE may comprise information about at least one logical channel or at least one logical channel group, the at least one logical channel or at least one logical channel group being associated with at least one of the one or more CSI reports.

At least one of the one or more MAC CE may further comprise data associated with the at least one logical channel or the at least one logical channel group.

The apparatus may comprise means for determining if there is at least one available resource for transmitting at least a part of the one or more CSI reports and when it is determined that there is at least one available resource for transmitting at least the part of the one or more CSI reports, to transmit to the access node at least the part of the one or more CSI reports.

The means for sending may be configured to send at least one of the one or more MAC CE when at least one resource is unavailable for sending at least a part of the one or more CSI reports to the access node.

The apparatus may comprise means for causing the apparatus to provide information indicating that at least one of the one or more MAC CE provides information about at least one of the one or more of the CSI reports.

The information indicating that at least one of the one or more MAC CE provides information about the at least one of the one or more of the CSI reports may be provided in one or more of a medium access control sub header, a medium access control header, or in at least one of the one or more MAC CE.

At least one of the one or more CSI reports may be associated with: one or more serving cells: one or more carriers; one or more component carriers; or one or more bandwidth parts.

The determined information associated with at least one of the one or more of the CSI reports may comprise information indicating the one or more serving cells, one or more component carriers, one or more carriers, or one or more bandwidth parts associated with the at least one of the one or more CSI reports.

The apparatus may comprise means for determining that one or more triggers have occurred and in response to determining that one or more triggers have occurred, the means for sending is configured to send at least one of the one or more MAC CE.

The one or more triggers may comprise one or more of: one or more events; or one or more conditions.

At least one of the one or more MAC CE may further comprise information about the one or more triggers that have occurred.

The apparatus may comprise means for receiving configuration information from the access node, said configuration information configuring the apparatus to provide the one or more MAC CE, and to send at least one of the one or more MAC CE to the access node in accordance with the configuration information.

The apparatus may be in or provided by a user equipment or terminal.

According to a sixth aspect, there is provided a method comprising: determining information associated with at least one of one or more channel state information, CSI, reports which are to be reported to an access node; and sending said determined information associated with the at least one of one or more CSI reports to the access node in one or more medium access control control elements, MAC CE, at least one of the one or more MAC CE providing a buffer status in addition to the determined information associated with the at least one of one or more CSI reports.

The information associated with the at least one of one or more CSI reports may comprise one or more of: information indicating that the at least one of the one or more CSI reports is available; or information indicating a size the at least one of the one or more CSI reports.

The method may comprise determining the information in response to determining that at least one of the one or more CSI reports, for reporting to the access node, is available.

At least one of the one or more MAC CE may comprise information about at least one logical channel or at least one logical channel group, the at least one logical channel or at least one logical channel group being associated with at least one of the one or more CSI reports.

At least one of the one or more MAC CE may further comprise data associated with the at least one logical channel or the at least one logical channel group.

The method may comprise determining if there is at least one available resource for transmitting at least a part of the one or more CSI reports and when it is determined that there is at least one available resource for transmitting at least the part of the one or more CSI reports, transmitting to the access node at least the part of the one or more CSI reports.

The method may comprise sending at least one of the one or more MAC CE when at least one resource is unavailable for sending at least a part of the one or more CSI reports to the access node.

The method may comprise providing information indicating that at least one of the one or more MAC CE provides information about at least one of the one or more CSI reports.

The information indicating that at least one of the one or more MAC CE provides information about the at least one of the one or more of the CSI reports may be provided in one or more of a medium access control sub header, a medium access control header, or in at least one of the one or more MAC CE.

At least one of the one or more CSI reports may be associated with: one or more serving cells: one or more carriers; one or more component carriers; or one or more bandwidth parts.

The determined information associated with at least one of the one or more of the CSI reports may comprise information indicating the one or more serving cells, one or more component carriers, one or more carriers, or one or more bandwidth parts associated with the at least one of the one or more CSI reports.

The method may comprise determining that one or more triggers have occurred and in response to determining that one or more triggers have occurred, the means for sending may be configured to send at least one of the one or more MAC CE.

The one or more triggers may comprise one or more of: one or more events; or one or more conditions.

At least one of the one or more MAC CE may further comprise information about the one or more triggers that have occurred.

The method may comprise receiving configuration information from the access node, said configuration information configuring an apparatus to provide the one or more MAC CE, and sending at least one of the one or more MAC CE to the access node in accordance with the configuration information.

The method may be performed by an apparatus. The apparatus may be in or provided by a user equipment or terminal.

According to another aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### LIST OF THE DRAWINGS

Example embodiments will become more fully understood from the detailed description given herein below and the accompanying drawings, which are given by way of illustration only and thus are not limiting of this disclosure.
Fig. 1 shows an example of a communication network to which examples disclosed herein may be applied;
Fig. 2 shows an example of signaling flow diagram;
Fig. 3 illustrates a first example of a MAC CE of some embodiments;
Fig. 4 illustrates a second example of a a MAC CE of some embodiments;
Fig. 5 illustrates a third example of a a MAC CE of some embodiments;
Fig. 6 illustrates a fourth example of a a MAC CE of some embodiments;
Fig. 7 shows, an example of a method;
Fig. 8 shows, another example of a method and
Fig. 9 shows an example of an apparatus.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a communication network, such as any of the following radio access technologies (RATs): Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" refers to a node in a communication network via which user equipment may access the network and/or which is capable of controlling radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device.

Moreover, in connection of split radio access network (RAN), the network device may refer to a centralised unit (CU) of a base station and/or a distributed unit (DU) of a base station. An interface between CU and DU may be referred to as an F1 interface in NR. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise e.g. a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layers. Other functional splits are possible too. In practice, any processing task may be performed in either the CU or the DU and the boundary where the responsibility is shifted between the CU and the DU may depend on the applied implementation.

The term "terminal device" refers to any end device that may be capable of wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources include e.g. a physical resource block (PRB), a radio frame, a subframe, a time slot, a sub band, a frequency region, a sub-carrier, a beam, etc. The term "transmission" and/or "reception" may refer to wirelessly transmitting and/or receiving via a wireless propagation channel on radio resources.

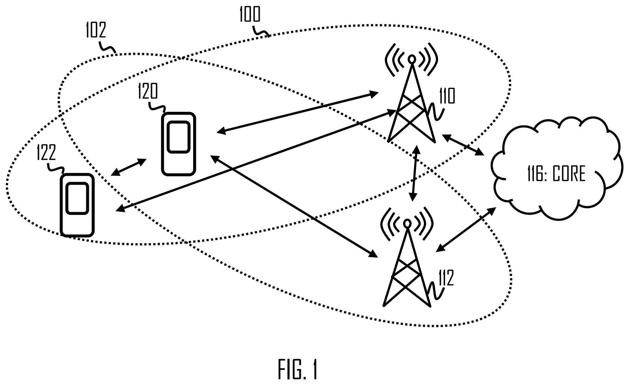

Fig. 1 illustrates an example of a communication network to which examples disclosed herein may be applied. The communication network or a cellular communication network may comprise a network node 110 providing one or more cells, such as cell 100, and a network node 112 providing one or more other cells, such as cell 102. Each cell may be, e.g., a macro cell, a micro cell, femto, or a pico cell, for example. The cell may define a coverage area or a service area of the corresponding access node.

The network node 110 may provide a user equipment (UE) 120 (one or more UEs) with wireless access to the communication network. The wireless access may comprise downlink (DL) communication from the network node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment.

There may be a plurality of UEs 120, 122 in the system. Each of them may be served by the same or by different network nodes 110, 112. UE may be configured with dual connectivity (DC), wherein the UE, e.g. UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications call such an interface as X2 interface. An interface between an LTE node and a 5G node, or between two 5G nodes may be called Xn interface.

The network nodes 110 and 112 may be further connected via another interface to a core network 116 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5G core may comprise e.g. an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example.

Channel state information (CSI) parameters are quantities related to the state of a channel. Communication devices, such as user equipment (UEs), report CSI parameters to a network (e.g., to a base station) as feedback. The CSI parameters may be provided as feedback in a CSI report.

Examples of CSI parameters include: Channel Quality Information (CQI), Precoding Matrix Indicator (PMI), CSI reference signal resource indicator (CRI), synchronization signal/physical broadcast channel resource block indicator (SSBRI), Layer Indicator (LI), Rank Indicator (RI), layer 1 reference signal received power (L1-RSRP).

A communication device (e.g., a UE) may receive CSI reference signals from a network (e.g., a base station) to be used in order to measure CSI feedback. Upon receiving a CSI report comprising CSI parameters from the communication device, the network schedules downlink data transmissions to the communication devices accordingly.

CSI-RS reference signals may be UE-specifically configured in RRC. However, CSI-RS reference signals can be shared among many UEs, i.e., more than 1 UE are configured to receive the same resource elements (RE).

In general, in order to save on DL resources, the gNB may try to use cell-specific or group-specific CSI-RS resources. However, in some cases UE specific CSI-RS may be used. In this latter case the DL overhead may increase linearly with the number of UEs in the cell.

CSI-RS may be used to support one or more functions. The one or more functions may comprise one or more of: DL CSI acquisition; beam management (BM) (based on L1-RSRP); tracking (TRS); and/or UL CSI acquisition in reciprocity-based UL precoding;

In some applications (e.g., CSI-RS for BM) CSI-RS are spatially beamformed into different directions.

For example, CSI reference signals (CSI-RSs) are used for beamforming support. CSI-RS may be configured to be either beam-specific or device/UE-specific. CSI-RS may be mapped onto certain resources in the frequency and time domain. These reference signals may be used for performing tasks such as beam acquisition and evaluation, adaptation of the beam (e.g., beam refinement), decision making for beam switching, and UE tracking with steerable beams.

A UE may be configured with up to 48 report configurations (*CSI-ReportConfig*) per component carrier (CC) / 4 per bandwidth part (BWP). In other embodiments, there may be more or less than 48 report configurations. In other embodiments, there may be more or less than 4 report configurations per BWP.

By way of example only, one CSI resource configuration within one report configuration can be configured with up to 16 resource sets (aperiodic CSI) and 1 resource set (otherwise). However, this may be different in different embodiments.

By way of example only, one CSI resource set may have up to 64 NZP (non-zero power) CSI-RS resources. By way of example only, one NZP-CSI-RS resource may be provided for up to 32 antenna ports.

For CSI acquisition, the UE may be configured with a codebook type. Given the measured channel across a CSI-RS resource, the UE may choose a codeword from a specified codebook, i.e., precoding matrix indicator (PMI), along with channel quality indicator (CQI), rank indicator (RI).

UE may be configured to measure several CSI-RS resources (for example, up to 8) within a resource set and report the favourite resource, CSI-RS resource indicator (CRI), along with PMI, CQI and RI which corresponds to that selected resource.

The CSI reporting framework may comprise two parts, including a part for configuration and a part for triggering. 'CSI-ResourceConfig' specifies what type of reference signal is to be transmitted. 'CSI-ResourceConfig' configures the types of the transmission (e.g., periodic, aperiodic, semipersistent). In this manner, 'CSI-ResourceConfig' triggers the transmission of resources.

'CSI-ReportConfig' specifies which of 'CSI-ResourceConfig' is to be used for the measurements. 'CSI-ReportConfig' comprises a number of parameters including: 'reportConfigType', 'reportQuantity', 'reportFreqConfiguration', 'timeRestrictionForChannelMeasure-ments', 'timeRestrictionForInterferenceMeasurements', and 'codebookConfig'. For example, the 'reportConfigType' parameter indicates the scheduling method of the report. Examples of scheduling methods include: periodic, aperiodic and semi. The 'reportQuantity' parameter indicates what to measure. A type of quantities to measure may be grouped into CSI-related quantities, or L1-RSRP-related quantities.

In the time domain, a CSI-RS resource may start at any OFDM symbol of a slot and the CSI-RS may, for example span 1, 2, or 4 OFDM symbols. This may be dependent on the number of ports configured.

As mentioned previously, UE measurement reporting of CSI periodic, semi-persistent, or aperiodic manner, which is so-called report types in NR report configuration. In some examples, the periodic CSI-RS resources may be used to generate any report type. In some examples, the semi-persistent and periodic CSI-RS resources maybe used to generate semi-persistent CSI reports. In some examples, the aperiodic CSI-RS may be utilized to generate the aperiodic report. In some examples, the aperiodic CSI-RS may be utilized only to generate the aperiodic report.

The CSI Report setting may define which part of the bandwidth the CSI should correspond to. The CSI Report setting may define what granularity in frequency the CSI should have. To accomplish this, for example, the bandwidth of a BWP may be divided into a number of sub bands.

All CSI-RS resources within one set may be configured with same density and same number of ports. This may be with the exception of the NZP CSI-RS resources used for interference measurement.

For semi-persistent and aperiodic CSI-RS, the actual triggering of CSI-RS transmission may be per the CSI-RS resource-set via either MAC CE (medium access control control element) or DCI. A resource set may be used as part of the UE report configurations describing what is to be measured by the UE and, correspondingly, what measurement reporting are to be done by the UE. For example, if a CSI-RS resource-set is configured as 'aperiodic' by RRC signalling, the CSI-RS resource set configuration may comprise a slot offset, for example aperiodicTriggeringOffset, which defines the time interval between the triggering DCI and the CSI-RS transmission.

For aperiodic CSI reporting, for example up to 16 different reporting settings may be triggered with single DCI (e.g. for multiple component carriers).

For semi-periodic CSI reporting can trigger only one report setting with a single DCI. To trigger several SP-CSI reports (each in different slots), multiple DCIs may be needed.

In some embodiments, CSI/beam reporting may be reported via MAC CE(s) In some embodiments, CSI/beam reporting may be encoded using ASN.1. In some embodiments, CSI/beam reporting may be reported at least partially be done through L1-UCI.

With, for example, event-based CSI/beam reporting with one or multiple events which the UE monitors, the network may have little or no visibility/knowledge regarding whether an event has occurred and/or which event(s) has occurred.

More generally, if CSI reporting is done through MAC CE, the network may have little or no visibility/knowledge not only for event-based CSI reporting but also for other types of CSI reporting.

Some embodiments may enhance the visibility or knowledge at the network regarding the status or situation at the UE relating to CSI report(s).

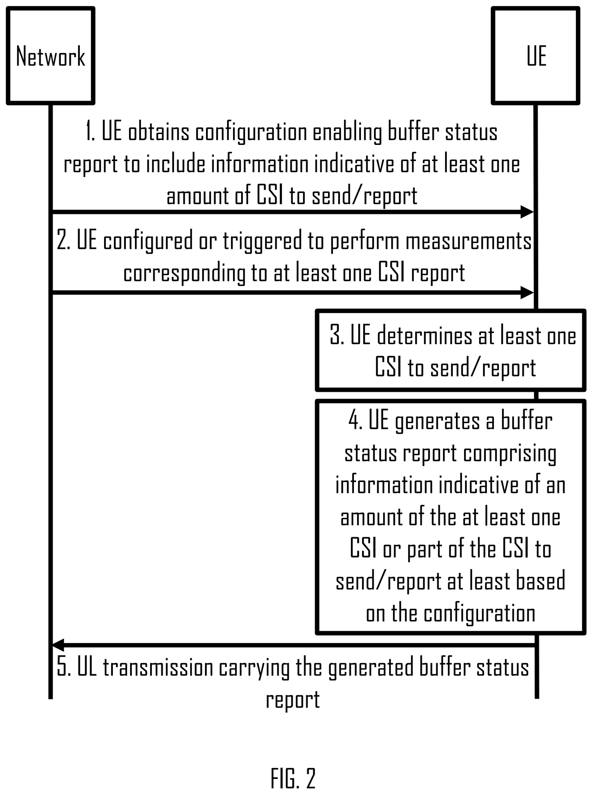

Reference is made to Figure 2 which shows an example signal flow of some embodiments.

As referenced 1, the UE receives configuration information from the network.

The configuration information may relate to the configuration of the UE to provide a report of the status of one or more buffers of the UE. This report may be referred to a buffer status report in this document.

The configuration information may further define the information which is to be included in the buffer status report.

The information which is to be included in the buffer status report may further comprise information about a size associated with one or more of the one or more CSI reports which are to be sent or reported to the network. This may be actual size of one or more CSI reports or an estimated size of one or more CSI reports or a predicted size of one or more CSI reports.

The information about the one or more CSI reports may comprise information about at least one size of one or more CSI reports which are to be sent or reported to the network.

The configuration information may be provided by an access point or base station.

In one example embodiment, the UE may receive configuration information which causes the UE to be configured to provide a buffer status report which provide information abou the status of one or more buffers of the UE and at least one size associated with one or more CSI reports which are to be reported.

As referenced 2, the UE is configured or triggered to perform measurements. The measurements may be for one or more CSI reports.

It should be appreciated that the part of the procedure referenced 2 may take place before or after the part of the procedure referenced 1. In some embodiments, the part of the procedure referenced 2 may take place at the same time as the part of the procedure referenced 1.

In the example shown in Figure 2, the UE is shown as being configured or triggered to perform measurements by the network. For example, the UE may be configured or triggered by the access point or base station. However, this is by way of example only and the UE may be trigger itself or configure itself. For example this may be in response to one or more conditions or events being detected by the UE.

The measurements made by the UE may be with respect to one or more reference signals transmitted by the base station or access point.

As referenced 3, the UE determines at least one CSI which is to be reported or sent to the network.

As referenced 4, the UE determines a buffer status report about a status of one or more buffers of the UE. The buffer status report further comprises information about at least one size of data associated with one or more of the one or more CSI reports which is to be sent to the network..

The buffer status report may comprise information indicative of at least one size of at least one CSI or at least a part of the CSI to send/report based on the received configuration,

As referenced 5, the UE sends the buffer status report to the network, for example to the access point or base station. An UL transmission (such as PUSCH or PUCCH) for the UE to the network may carry the generated buffer status report.

Although not shown the at least one CSI report will be sent the network. When the network receives the buffer status report indicating that there is at least one CSI report waiting to be sent to the network, the network can schedule UL resources for the UE to report the at least one CSI report.

There may be one or more different types of CSI reporting: periodic, semi-persistent, aperiodic, and/or event-based reporting.

In some embodiments, the CSI report will be sent via a MAC CE.

In some embodiments, CSI may be encoded using abstract syntax notation .1 (ASN.1). ASN.1 is used to describe data structures.

Alternatively, or additionally, the CSI reporting may at least partially be done through L1-UCI (layer 1 uplink control information).

In some embodiments, the UE may generate a buffer status report which comprises information indicative of at least one size of the at least one CSI or part of the CSI to be sent or reported. The UE may generate the buffer status report if there are sufficient resources (e.g. UL-SCH) to carry the buffer status report or at least a part of the buffer status report.

In some embodiments, the UE may send the buffer status report if there is no available resource or resources to carry the CSI report or at least a sub report comprising part of the CSI report.

In some embodiments, the UE may be triggered to determine and/or send the buffer status report when the UE has at least one CSI to report.

The buffer status report may comprise information indicative of the size of the at least one CSI or part of the CSI to be sent or reported to the access node.

The buffer status report may comprise information indicating whether there is at least one CSI to report. In some embodiments, the information indicating whether there is at least one CSI to report may be provided by the information indicative of the at least one size of the at least one CSI or part of the CSI to be sent or reported to the access node.

The buffer status report may comprise information indicating what CSI is waiting to be reported.

In some embodiments, the at least one CSI or part of the at least one CSI is mapped to or associated with at least one logical channel (LCH) or logical channel group (LCG).

The at least one LCH or LCG associated with the at least one CSI may be dedicated or shared. For example, the sharing may be with data and/or with one or more other types of information. If shared with data, the size corresponding to this LCH or LCG may be the information indicative of the at least one size of at least one CSI to report. The BSR may correspond to: CSI only, CSI and data, or data only. The UE may provide an indication of whether the BSR corresponds to CSI only, CSI and data, or data only.

The at least one LCH or LCG associated with the at least one CSI may be at least one virtual LCH or LCG.

In some embodiments, the buffer status report may relate to at least one CSI corresponding to the LCH or LCG. The buffer status report may comprise information identifying the LCH or LCG associated with the at least one CSI.

In some embodiments, mapping or association of the at least one CSI to at least one LCH or LCG may be predefined (e.g., in protocol specifications).

In some embodiments, mapping or association of the at least one CSI to at least one LCH or LCG may be configured/indicated via RRC signalling or one or more MAC CE.

In some embodiments, mapping or association of the at least one CSI to at least one LCH or LCG may be associated with or comprised in a CSI report configuration or sub-configuration. This CSI report configuration or sub-configuration may be received from the access node.

In some embodiments, mapping or association of the at least one CSI to at least one LCH or LCG may be associated with or comprised in a LCH or LCG configuration.In some embodiments, mapping or association of the at least one CSI to at least one LCH or LCG may be configured or defined per cell, e.g. serving cell, carrier, CC (component carrier), BWP, per cell group, carrier group, CC group, or BWP group.

In some embodiments, the information indicative of the amount of at least one CSI to report in the buffer status report may correspond to an associated cell, e.g. serving cell, a carrier, CC (component carrier), BWP, per cell group, carrier group, CC group, or BWP group.

The UE may provide information, for example in the buffer status report, identifying the associated cell, e.g. serving cell, carrier, CC (component carrier), BWP, per cell group, carrier group, CC group, or BWP group.

The information indicative of the amount of at least one CSI to report may be per cell, e.g. serving cell, carrier, CC (component carrier), BWP, per cell group, carrier group, CC group, or BWP group. This may mean that in some cases, there may be information in the buffer status report relating to a plurality of different CSI which are associated with the respective cell, e.g. serving cell, carrier, CC (component carrier), BWP, per cell group, carrier group, CC group, or BWP group.

Some CSI content may be mapped to a particular LCH or LCG based on one or more of:
CSI type;
associated cell, e.g. serving cell, carrier, CC (component carrier), BWP, per cell group, carrier group, CC group, or BWP group;
amount or size related to CSI;
priority of the LCH or LCG; and
the priority of the CSI content.

Some CSI content may be mapped to a particular LCH or LCG based on LCH or LCG mapping restriction configurations.

The CSI may relate to any one or more of the previously describe CSI parameters.

A CSI report may be one of the following: event-based or UE -triggered CSI report; aperiodic CSI report; periodic CSI report; semi-persistent CSI report; NCJT (non-coherent joint transmission) CSI report; CJT CSI report; TDCP (time domain channel properties) CSI report; Type I CSI report; Type II (or enhanced Type II) CSI report; report comprising delay offset(s) or phase offset(s); beam report; and/or the like.

The information indicative of the amount of at least one CSI to report may be per at least one CSI report type. This means that there may be a plurality of information provided in the buffer status report with different information associated with a different CSI report type.

The UE may transmit an indication, via the buffer status report MAC CE, indicative of whether there is information indicative of the amount of the at least one CSI to report.

This indication may allow the UE and/or the network to determine if at least one field or octet is present or absent in the one or more MAC CE, where such at least one field or octet may carry the information indicative of the amount of the at least one CSI to report.

This indication may be for example be a single bit separate from the LCH or LCG identifier or correspond to an LCH or LCG identifier.

The UE may provide an indication, via the buffer status report MAC CE, indicative of the size of the at least one CSI to report. Such an indication may also be indicative of the number of octets dedicated for the information indicative of the amount of the at least one CSI to report.

The UE may be triggered provide a buffer status report, at least based on a trigger.

The triggering may correspond to at least one event or condition, e.g., related to CSI/beam measurements, occurring.

The information indicative of the amount of at least one CSI to report may be indicative of the event which has occurred, for example, the event identifier or ID may be provided.

If there is more than one configured event causing the triggering, the information indicative of the amount of at least one CSI to report may be indicative of number of events that have occurred and/or of which events (i.e., event identifier or ID) has occurred.

The information indicative of the amount of at least one CSI to report may be provided for or associated with one or more events.

The triggering may correspond to an expiry of a timer.

The triggering may be done in a periodic or semi-persistent manner.

The triggering may be based on an indication or information sent by the access node, for example gNB.

The amount of the at least one CSI or part of the CSI to send/report may correspond to at least one volume or size of the at least one CSI.

The amount of the at least one CSI or part of the CSI to send/report may correspond to the existence or absence of the at least one CSI.

If there are insufficient resources (for example UL-SCH) to carry the buffer status report, the UE may prioritize one or more of the CSIs. The UE may alternatively or additionally drop the information indicative of the amount of one or more CSIs to report. For example, the information indicative of the amount of at least one CSI to report may have higher priority or lower priority than the information about (LCH) data buffer size(s).

The UE may be specified or configured/indicated (e.g., via RRC) with the order of the buffer status report part(s) to prioritize or to drop; in this case, there may be a truncated MAC CE.

The UE may have a resolution or range with which to provide the information indicative of the amount of at least one CSI to report.

The UE may have a given number of bits with which to provide the information indicative of the amount of at least one CSI to report.

The UE may be configured or specified with the resolution or range with which to provide the information indicative of the amount of at least one CSI to report. Where the UE is configured, the UE may be configured via RRC signalling received from the access node.

In some embodiments, the UE may provide an indication indicative of whether the buffer status report MAC CE includes information indicative of amount of at least one CSI to report. Such information may be provided as part of the corresponding MAC sub-header or header or may be included in the one or more MAC CE.

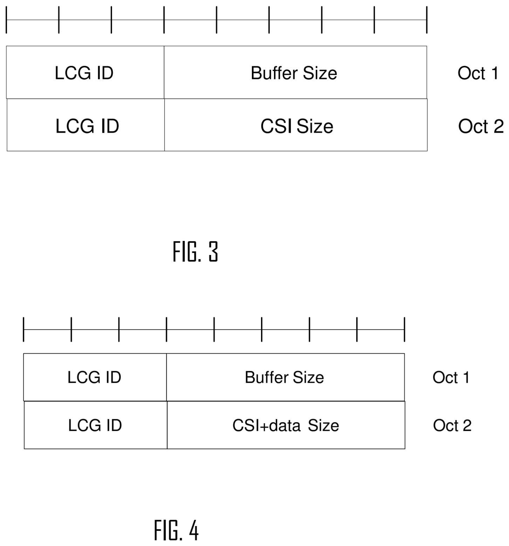

Reference is made to Figure 3 which shows an example of a BSR (buffer status report) MAC CE. The first octet indicates the logical channel group identity (LCG ID) and indicates the buffer size. The buffer size may indicate the amount of data to be transmitted. The second octet indicates the LCG ID and the size of the CSI data or report to be transmitted associated with that LCG ID. It should be appreciated that in some embodiments, octet 1 may be omitted.

Reference is made to Figure 4 which shows another example of a BSR. The first octet indicates the LCG ID and indicates the buffer size. The buffer size may indicate the amount of data to be transmitted. The second octet indicates the logical channel group identity (LCG ID), the size of the CSI data or report(s) to be transmitted (optionally) and also the size of other data which is also to be transmitted to the network. It should be appreciated that in some embodiments, octet 1 may be omitted.

In the previously described embodiments, a buffer status report is sent comprising information about the determined at least one size associated with one or more of the one or more CSI reports. In other embodiments, one or more of the following control elements may alternatively or additionally be used to report the determined amount of data associated with one or more of the one or more CSI reports:
Configured Grant (CG) Confirmation MAC CE;
BFR (beam failure recover) MAC CE:
   Multiple Entry Configured Grant Confirmation;
   MAC CE for number of Desired Guard Symbols;
   MAC CE for recommended bit rate query;
   PHR (power headroom reporting) MAC CE; or
   Any other MAC CE or control element provided through MAC.

In some embodiments, a dedicated MAC CE may be associated with one or more of the one or more CSI reports.

For example, a MAC CE may provide information about one or more of the following:
whether there is at least one CSI to report;
information indicative of the amount of at least one CSI to report (if there is at least one CSI to report); or
whether there is information to report and/or whether there is pending information to report.

The information may be or may correspond to at least one of: CSI (e.g., to report through L1-UCI), CSI MAC CE, CG confirmation MAC CE, BFR MAC CE, MAC CE for number of desired guard symbols, MAC CE for recommended bit rate query, PHR MAC CE, or any other MAC CE or control element(s) provided through MAC; and/or an amount of the information to report and/or the pending information to report.

The one or more MAC CE may be a dedicated or separate MAC CE.

In some embodiments, one or more of the above information may be attached or aggregated or provided in a BSR MAC CE or any other suitable MAC CE.

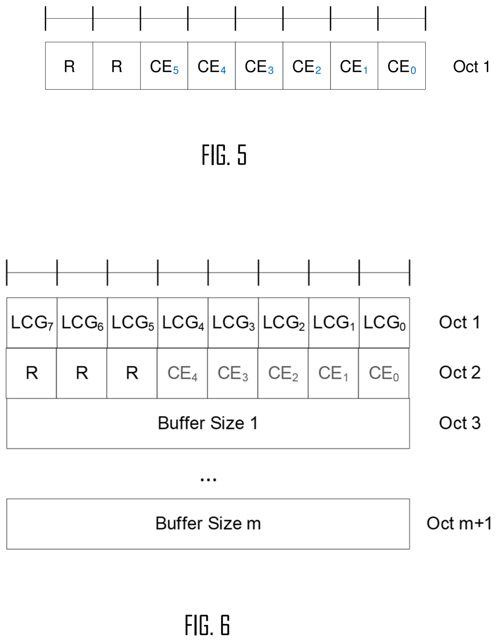

Reference is made to Figure 5 which shows an example of MAC CE. The one or more MAC CE may be a dedicated MAC CE or part of a MAC CE, for example a BSR MAC CE. In this example, 6 CEᵢ s are shown, CE₀ to CE₅ where each CEᵢ value has a value of 0 or 1. The value will indicate if the i-th control information is pending for transmission. This control information may be one or more of at least one CSI; one or more PHR MAC CE; and/or one or more BFR MAC CE. R represents a reserved bit in some embodiments.

Reference is made to Figure 6 which shows an example of BSR MAC CE. In this example, 5 CEᵢ s are shown, CE₀ to CE₄ where each CEᵢ value has a value of 0 or 1. The value will indicate if the i-th control information is pending for transmission This control information may be one or more of at least one CSI; one or more PHR MAC CE; and/or one or more BFR MAC CE. Each or at least one of the CEᵢ may have a corresponding at least one field or octet (not shown in Figure 6) comprising information indicative of the corresponding amount of information to transmit. For example, this may indicate the size of CSI or the size of PHR MAC CE.

Some embodiments may allow the UE to provide the network with an indication indicative of the amount of at least one CSI to report

Some embodiments may provide the network with visibility of knowledge regarding amount of at least one CSI that needs to be reported by the UE. This allows the network to know or adapt the amount of UL resources need to be scheduled for the UE.

Some embodiments may reduce overhead.

For example, a buffer status report MAC CE may be used to carry information indicative of the amount of at least one CSI which is to be report. In some embodiments, a need for a dedicated UL channel/transmission or MAC CE may be avoided.

However, it should be noted that in alternative embodiments, a dedicated UL channel/transmission or different MAC CE may be used for reporting the buffer status.

In the case of event-based CSI/beam reporting with one or multiple events configured which the UE monitors, the network may have little to no visibility/knowledge regarding whether an event has occurred and/or which event or events have occurred. This may be avoided with the reporting of some embodiments.

In the case of the use of MAC CE for the CSI reporting, the network may have a lack of visibility of the CSI reports which are yet to be reported. Embodiments may address this issue.

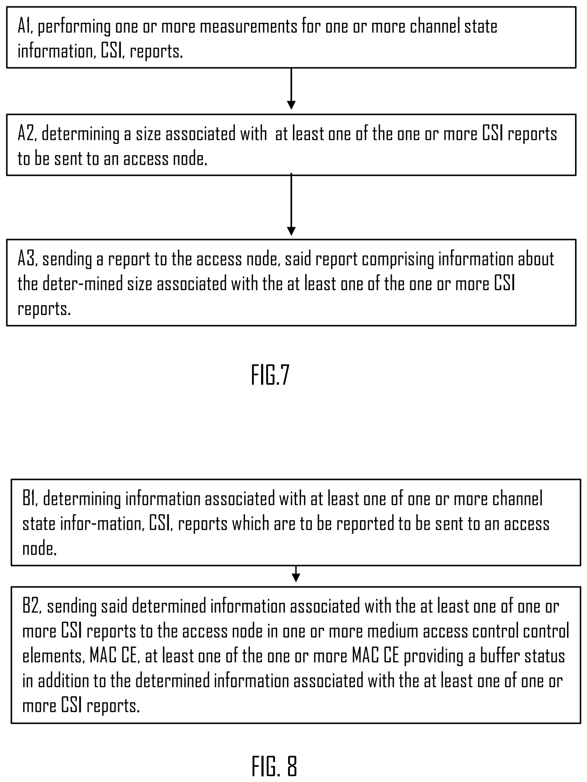

Reference is made to FIG. 7 and Fig. 8 which show methods of some example embodiments.

The method may be performed by an apparatus.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

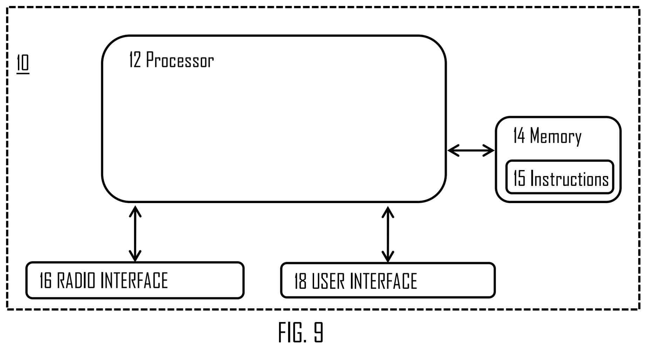

Alternatively or additionally, the apparatus may be such as discussed in relation to FIG.9.

The respective methods may be provided by computer program code or computer executable instructions.

Reference is made to Figure 7. The apparatus may be or provided in a user equipment or terminal.

The method comprises as referenced A1, performing one or more measurements for one or more channel state information, CSI, reports.

The method comprises as referenced A2, determining a size associated with at least one of the one or more CSI reports to be sent to an access node.

The method comprises as referenced A3, sending a report to the access node, said report comprising information about the determined size associated with the at least one of the one or more CSI reports.

Reference is made to Figure 8. The apparatus may be or provided in a user equipment or terminal.

The method comprises as referenced B1, determining information associated with at least one of one or more channel state information, CSI, reports which are to be reported to an access node.

The method comprises as referenced B2, sending said determined information associated with the at least one of one or more CSI reports to the access node in one or more medium access control control elements, MAC CE, at least one of the one or more MAC CE providing a buffer status in addition to the determined information associated with the at least one of one or more CSI reports.

Fig. 9 shows, by way of example, a block diagram of an apparatus 10. The apparatus 10 comprises, for example, at least one processor 12 and at least one memory 14 storing instructions 15 that, when executed by the at least one processor, cause the apparatus 10 at least to perform the method or methods as disclosed herein, and any of the embodiments thereof. In an example, the at least one memory and the instructions (e.g. a computer program code, software), are configured, with the at least one processor, to cause the apparatus 10 to perform the method or methods as disclosed herein, and any of the embodiments thereof.

A processor 12 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 14 may be implemented using any suitable data storage technology. The memory may comprise a database for storing data. The memory 14 may be at least in part external to apparatus 10 but accessible to apparatus 10.

The instructions 15 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 10 is a terminal device, such as the UE of Fig. 1. As another example, the apparatus is comprised in such a terminal device, e.g. as a chipset configured to control the terminal device. The apparatus 10 may be caused or configured to perform at least the method of Fig. 7 or 8 and/or any one or more of the embodiments described.

The apparatus may comprise one or more entities of any of protocol layers, such as a MAC entity, an RRC entity, an RLC entity, a PDCP entity or a PHY entity. In some embodiments, the entity is configured to perform at least the method of Fig. 7 or Fig. 8, and/or any one or more of the embodiments described.

The apparatus 10 comprises a radio interface 16. The radio interface 16 may provide the apparatus 10 with communication capabilities. The radio interface 16 may comprise a receiver configured to receive information in accordance with at least one cellular or non-cellular standard. The radio interface 16 may comprise a transmitter configured to transmit information in accordance with at least one cellular or non-cellular standard. The receiver may comprise more than one receiver. The transmitter may comprise more than one transmitter. The radio interface 16 may comprise a transceiver configured to receive and transmit information in accordance with at least one cellular or non-cellular standard. The transceiver may comprise more than one transceiver.

The apparatus 10 may comprise a user interface 18 comprising, for example, at least one of a keypad, a microphone, a touch display, a display, a speaker, etc. The user interface 18 may be used to control the apparatus by the user. The user interface 18 may be external to the apparatus 10. For example, the apparatus 10 may be connected to another device, such as a computer, either via wireless or wired connection, and the apparatus 10 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 10. For example, the at least one processor 12, the memory 14, and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising means for:
determine information associated with at least one of one or more channel state information, CSI, reports which are to be reported to an access node; and
send said determined information associated with the at least one of the one or more CSI reports to the access node in one or more medium access control control elements, MAC CE, at least one of the one or more MAC CE providing a buffer status in addition to the determined information associated with the at least one of one or more CSI reports.

2. The apparatus as claimed in claim 1, wherein the information associated with the at least one of one or more CSI reports comprises one or more of:
information indicating that the at least one of the one or more CSI reports is available; or
information indicating a size of the at least one of the one or more CSI reports.

3. The apparatus as claimed in claim 1 or 2, further comprising means for determining the information in response to determining that at least one of the one or more CSI reports, for sending to the access node, is available.

4. The apparatus as claimed in any preceding claim, wherein at least one of the one or more MAC CE comprises information about at least one logical channel or at least one logical channel group, the at least one logical channel or at least one logical channel group being associated with at least one of the one or more CSI reports.

5. The apparatus as claimed in claim 4, wherein at least one of the one or more MAC CE further comprises data associated with the at least one logical channel or the at least one logical channel group.

6. The apparatus as claimed in any preceding claim, further comprising means for: determining if there is at least one available resource for transmitting at least a part of the one or more CSI reports and when it is determined that there is at least one available resource for transmitting at least the part of the one or more CSI reports, transmitting to the access node at least the part of the one or more CSI reports.

7. The apparatus as claimed in any preceding claim, further comprising means for sending at least one of the one or more MAC CE when at least one resource is unavailable for sending at least a part of the one or more CSI reports to the access node.

8. The apparatus as claimed in any preceding claims, further comprising means for providing information indicating that at least one of the one or more MAC CE provides information about at least one of the one or more of the CSI reports.

9. The apparatus as claimed in claim 8, wherein the information indicating that at least one of the one or more MAC CE provides information about the at least one of the one or more of the CSI reports is provided in one or more of a medium access control sub header, a medium access control header, or in at least one of the one or more MAC CE.

10. The apparatus as claimed in any preceding claim, wherein at least one of the one or more CSI reports is associated with: one or more serving cells; one or more carriers; one or more component carriers; or one or more bandwidth parts.

11. The apparatus as claimed in claim 10, wherein the determined information associated with at least one of the one or more of the CSI reports comprises information indicating the one or more serving cells, one or more component carriers, one or more carriers, or one or more bandwidth parts associated with the at least one of the one or more CSI reports.

12. The apparatus as claimed in any preceding claim, further comprising means for:
determining that one or more triggers have occurred and in response to determining that one or more triggers have occurred, sending at least one of the one or more MAC CE.

13. The apparatus as claimed in claim 12, wherein the one or more triggers comprise one or more of: one or more events; or one or more conditions, wherein at least one of the one or more MAC CE further comprises information about the one or more triggers that have occurred.

14. The apparatus as claimed in any preceding claim, further comprising means for:
receiving configuration information from the access node, said configuration information configuring the apparatus to provide the one or more MAC CE, and sending at least one of the one or more MAC CE to the access node in accordance with the configuration information.

15. A method comprising:
determining information associated with at least one of one or more channel state information, CSI, reports which are to be reported to an access node; and
sending said determined information associated with the at least one of the one or more CSI reports to the access node in one or more medium access control control elements, MAC CE, at least one of the one or more MAC CE providing a buffer status in addition to the determined information associated with the at least one of the one or more CSI reports.
